Europäisches Patentamt

European Patent Office

Office européen des brevets

(19)

(11) Numéro de publication : **0 311 511 B1**

(12)

# FASCICULE DE BREVET EUROPEEN

(45) Date de publication du fascicule du brevet :
**21.11.91 Bulletin 91/47**

(51) Int. Cl.⁵ : **B23B 47/28, B25B 5/14**

(21) Numéro de dépôt : **88402512.3**

(22) Date de dépôt : **04.10.88**

(54) **Dispositif de positionnement de panneaux pour leur assemblage par vissage.**

(30) Priorité : **05.10.87 FR 8713729**

(43) Date de publication de la demande :
**12.04.89 Bulletin 89/15**

(45) Mention de la délivrance du brevet :
**21.11.91 Bulletin 91/47**

(84) Etats contractants désignés :
**AT BE CH DE ES GB IT LI NL SE**

(56) Documents cités :
**EP-A- 0 017 949**
**EP-A- 0 053 908**
**EP-A- 0 136 080**
**CH-A- 284 536**
**DE-A- 1 653 045**

(56) Documents cités :
**FR-A- 2 360 370**
**GB-A- 731 958**
**GB-A- 1 473 650**
**US-A- 2 522 400**
**US-A- 3 278 177**
**US-A- 3 327 573**

(73) Titulaire : **LA FRANCAISE METALLURGIE**
**15, place de la Nation**
**F-75011 Paris (FR)**

(72) Inventeur : **Fallon, Régis, André**
**40, rue Charles Olliers**
**F-94170 Le Perreux sur Marne (FR)**

(74) Mandataire : **Netter, André et al**
**Cabinet NETTER, 40, rue Vignon**
**F-75009 Paris (FR)**

**Description**

L'invention conce  ie un dispositif pour positionner perpendiculairement l'un à l'autre des panneaux de bois ou analogue en vue de leur assemblage par vissage, un premier chant d'un premier panneau s'appuyant contre une première face du second panneau et les vis d'assemblage traversant l'épaisseur du second panneau pour venir se visser dans le premier panneau.

On appelle ici "face" chacune des deux faces principales d'un panneau, et "chant" chacune de ses faces étroites, au nombre de quatre pour un panneau rectangulaire.

EP-A-0053908 décrit un dispositif selon le préambule de la revendication 1, assurant le positionnement relatif des panneaux pendant le perçage, le fraisage et le vissage, et assurant en outre le guidage d'un outil de perçage.

Dans ce dispositif connu, les deux organes de maintien ne sont reliés l'un à l'autre que par l'intermédiaire des panneaux à assembler, et l'organe de guidage est constitué par deux glissières en queue d'aronde ménagées respectivement dans ceux-ci. L'organe de balayage doit donc être monté successivement sur les deux organes de maintien et ne permet de percer les panneaux qu'au voisinage des extrémités du premier chant du premier panneau.

Le but de l'invention est de perfectionner le dispositif connu de façon à permettre notamment le perçage des panneaux à tout endroit souhaité le long de ce premier chant.

Ce but est atteint grâce à la partie caractérisante de la revendication 1.

Selon un mode de réalisation de l'invention, chaque organe de maintien comprend :
— une paroi terminale sur laquelle viennent en butée des chants des deux panneaux perpendiculaires audit premier chant du premier panneau;
— deux ailes formant équerre, perpendiculaires l'une à l'autre et perpendiculaires à la paroi terminale, sur les faces internes desquelles s'appuient respectivement ladite seconde face du second panneau et une première face du premier panneau, au moins une première des ailes étant interrompue au voisinage de l'arête de l'équerre pour permettre le passage éventuel du second panneau au-delà de la première face du premier panneau ; et
— des moyens de serrage pour appliquer fermement les panneaux contre les ailes.

Dans ce mode de réalisation, les moyens de serrage peuvent comprendre un piston manoeuvrable en translation parallèlement au plan bissecteur de l'équerre et présentant deux faces d'appui respectivement parallèles aux deux ailes et situées à des distances égales de celles-ci.

Selon une caractéristique optionnelle, la seconde aile de chaque organe de maintien s'étend sensiblement jusqu'à l'arête de l'équerre de façon à servir de butée pour un chant du second panneau lorsque ce chant vient en affleurement de la première face du premier panneau, et chaque organe de maintien est propre à recevoir l'organe de guidage aussi bien au voisinage de la seconde aile pour une telle position du panneau qu'au voisinage de la première aile pour une position où le second panneau fait saillie au-delà de la première face du premier panneau.

Selon une variante, les deux organes de maintien sont interchangeables et comportent chacun deux ailes interrompues.

L'invention prévoit également que l'organe de balayage présente au moins deux alésages décalés l'un par rapport à l'autre latéralement par rapport à la direction longitudinale du premier chant de façon à permettre un perçage à mi-épaisseur de panneaux de différentes épaisseurs.

D'autres caractéristiques et avantages de l'invention ressortiront de la description détaillée donnée ci-après d'un mode de réalisation de l'invention, et des dessins annexés, dans lesquels :
— la figure 1 est une vue en perspective d'un dispositif selon l'invention mis en place sur deux panneaux de bois pour leur assemblage en L ;
— la figure 2 est une vue de dessus en coupe du montage de la figure 1 ;
— la figure 3 est une vue semblable à la figure 1, les panneaux devant être assemblés en T.

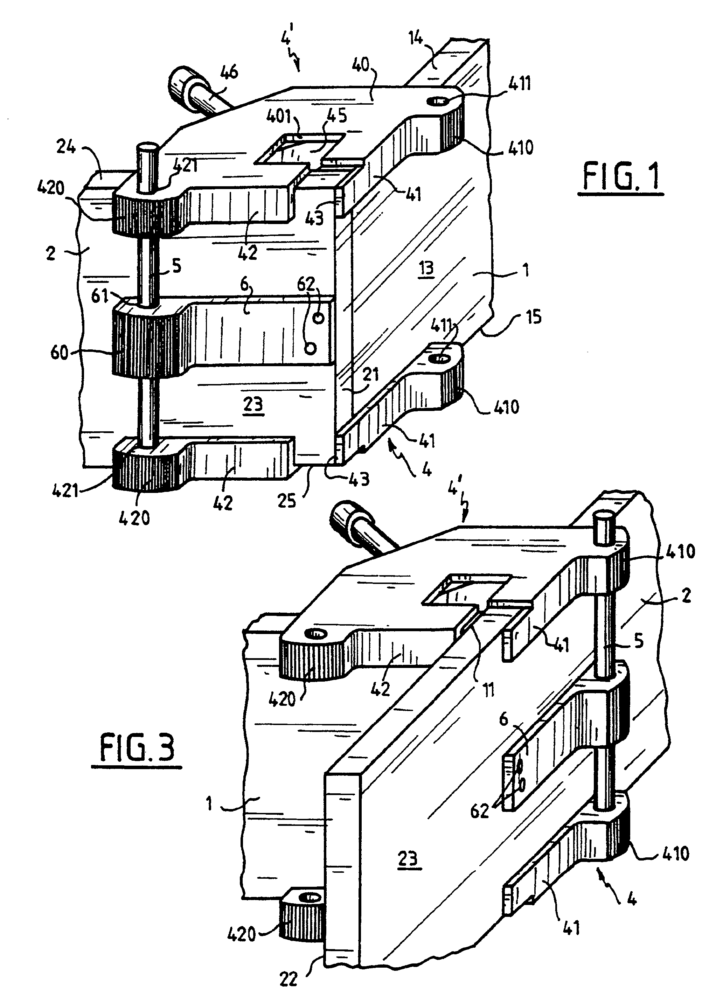

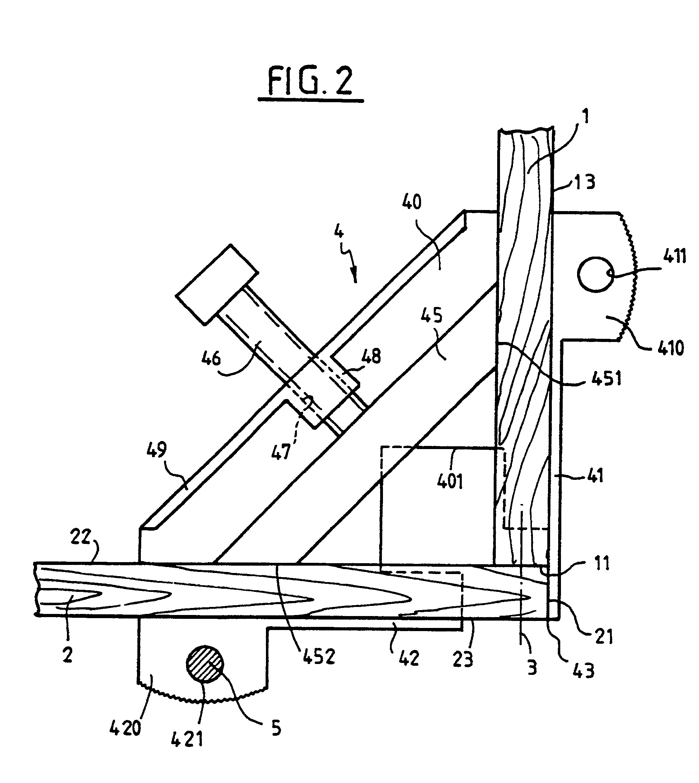

On voit aux figures 1 et 2 deux panneaux de bois 1 et 2 disposés verticalement en "L", un chant 11 du panneau 1 s'appliquant sur une face 22 du panneau 2, et un chant 21 du panneau 22 venant en affleurement d'une face 13 du panneau 1.

Le dispositif qui va être décrit permet d'assembler les panneaux dans la position qui vient d'être définie au moyen de vis dont les axes 3 sont perpendiculaires au chant 11, ces vis traversant l'épaisseur du panneau 2 à partir de sa face 23 opposée à la face 22 et pénétrant dans le panneau 1 pour s'y visser à partir du chant 11.

Les panneaux sont mis en place et maintenus au moyen d'un organe de maintien inférieur 4 et d'un organe de maintien supérieur 4', tous deux de construction semblable et symétriques l'un de l'autre par rapport à un plan horizontal.

Chacun de ces organes de maintien comprend une paroi terminale 40 s'étendant horizontalement et sur laquelle viennent en butée un chant du panneau 1 perpendiculaire au chant 11 et un chant du panneau 2 perpendiculaire au chant 21. Ainsi, le chant supérieur 14 du panneau 1 et le chant supérieur 24 du panneau 2 viennent en butée sur la paroi terminale 40 de l'organe de maintien supérieur 4', et les chants inférieurs 15 et 25 des panneaux 1 et 2 viennent en butée sur la paroi terminale 40 de l'organe de maintien inférieur 4.

De la paroi terminale 40 de chacun des organes de maintien dépendent, tournées vers l'autre organe de maintien, deux ailes 41 et 42 formant équerre, perpendiculaires entre elles et perpendiculaires à la paroi terminale 40. L'aile 41 s'étend jusqu'à l'arête 43 de l'équerre, tandis que l'aile 42 est interrompue à distance de cette arête pour une raison qui apparaîtra plus loin. Dans le montage des figures 1 et 2, les ailes 41 sont en contact avec les bords supérieur et inférieur de la face 13 du panneau 1 et avec les extrémités supérieure et inférieure du chant 21 du panneau 2. Les ailes 42 sont en contact avec les bords supérieur et inférieur de la face 23 du panneau 2.

Pour maintenir de façon stable la position des deux panneaux, ceux-ci sont serrés contre les ailes 41 et 42 par un piston 45 solidaire en translation d'une vis 46. La vis 46 coopère avec un trou fileté 47 traversant un bossage 48 prévu sur une troisième aile 49 également perpendiculaire à la paroi terminale 40 et orientée à 45° par rapport aux ailes 41 et 42. L'axe du trou 47 et par conséquent de la vis 46 est parallèle au plan de la paroi terminale 40 et compris dans le plan bissecteur de l'équerre formée par les ailes 41 et 42. Le piston 45 est lié à l'extrémité de la vis 46 de façon à se déplacer en translation avec celle-ci lorsqu'elle tourne, le contact de la paroi terminale 40 empêchant le piston de tourner lui-même. Le piston 45 présente deux surfaces d'appui 451 et 452 parallèles respectivement aux ailes 41 et 42, qui s'approchent et s'éloignent de celles-ci lors du déplacement du piston de façon que les distances entre les faces d'appui et les ailes respectives restent égales entre elles.

La paroi terminale 40 présente dans la région de l'arête 43 de l'équerre une ouverture 401 permettant de vérifier visuellement la juxtaposition des chants 14 et 24 ou 15 et 25 des deux panneaux. Des graduations peuvent être prévues sur les bords cette ouverture pour indiquer l'épaisseur des panneaux.

Des bossages 410 et 420 sont prévus sur les faces des ailes 41 et 42 respectivement tournées vers l'extérieur de l'équerre de chaque organe de maintien. Ces bossages sont traversés par des trous circulaires 411 et 421 respectivement. Les trous 411 et 421 de l'organe de maintien supérieur 4' sont alignés avec ceux de l'organe de maintien inférieur 4. L'axe des trous 411 et celui des trous 421 sont à égale distance de la ligne des arêtes 43 et à égale distance des faces internes des ailes 41 et 42 respectivement, c'est-à-dire des faces 13 et 23 des panneaux.

Une tige cylindrique 5 dont le diamètre est égal à celui des trous 411 et 421 est enfilée dans les trous 421 des deux organes de maintien, ainsi que dans un trou 61 traversant un bossage 60 d'une plaquette 6 qui est ainsi montée de façon à pouvoir coulisser entre les deux organes de maintien le long de la tige 5. La plaquette 6 est dimensionnée de façon à s'étendre sensiblement jusqu'à la ligne des arêtes 43 des équerres en s'appuyant sur la face 23 du panneau 2.

La plaquette 6 présente deux alésages ou canons de perçage 62 destinés à guider un outil de perçage tel qu'un foret pour le perçage des trous destinés à recevoir les vis d'assemblage des deux panneaux. Les deux alésages 62 sont à des distances différentes de la ligne des arêtes 43 de façon à permettre le perçage de panneaux 1 de différentes épaisseurs en des positions centrées par rapport à l'épaisseur. Les diamètres des deux alésages peuvent également être différents en fonction des épaisseurs correspondantes des panneaux. Bien entendu, il est possible de prévoir un seul alésage pour le perçage de panneaux d'une seule épaisseur, ou si un perçage à mi-épaisseur n'est pas considéré comme nécessaire. Inversement, on peut également prévoir plus de deux alésages permettant le perçage à mi-épaisseur de panneaux de plus de deux épaisseurs différentes. Par ailleurs, le décalage latéral des trous de perçage peut être assuré par d'autres moyens, par exemple par un réglage latéral de la position de la plaquette 6 elle-même.

Après avoir réalisé le montage qui vient d'être décrit, on effectue successivement les perçages aux endroits souhaités de la hauteur des panneaux en faisant coulisser la plaquette 6 le long de la tige 5 pour que l'alésage 62 correspondant à l'épaisseur du panneau 1 soit à chaque fois dans la position appropriée. Une graduation peut être prévue sur la tige pour aider l'opérateur à réaliser des trous espacés régulièrement. De préférence, on perce des trous de diamètre uniforme dans l'épaisseur des panneaux 1 et 2 pour recevoir des vis du type à filet roulé. Après perçage des différents trous, on réalise, sans utiliser la plaquette 6, des fraisages dans la face 23 du panneau 2 pour loger les têtes de vis, et on met celles-ci en place. L'assemblage est terminé et on peut démonter le dispositif.

A la figure 3 on retrouve les organes de maintien 4 et 4' des figures 1 et 2, représentés dans la même disposition spatiale qu'à la figure 1. En revanche, les panneaux 1 et 2 sont disposés de façon à réaliser un assemblage "en T", le panneau 2 s'étendant de part et d'autre du chant 11 du panneau 1 qui vient en contact avec sa face 22. Il est donc nécessaire d'appuyer la face opposée 23 du panneau 2 sur les ailes 41 des organes de maintien et non plus sur les ailes 42, de façon à permettre le passage du panneau 2 par les interruptions des ailes 42. C'est donc le panneau 1 qui s'appuie sur les ailes 42.

Corrélativement, c'est dans les bossages 410 des ailes 41 et non plus dans les bossages 420 des ailes 42 que passe la tige 5, et c'est entre ces ailes 41 et non plus entre les ailes 42 qu'est disposée la plaquette 6. Le fonctionnement du dispositif reste celui décrit à propos des figures 1 et 2.

On voit que l'extension des ailes 41 jusqu'à l'arête 43 de chaque équerre facilite la mise en affleurement du chant 21 du panneau 2 par rapport à la face 13 du panneau 1 lors d'un assemblage en L, mais néces sur les deux organes de maintien des sites de mc je différents pour la tige 5. Il est également possi... de prévoir un seul site de montage sur l'aile 41, le prolongement de cette dernière jusqu'à l'arête de l'équerre étant supprimé ou, s'il est maintenu, ne pouvant être utilisé pour la mise en affleurement.

Dans les différents cas examinés ci-dessus, les deux organes de maintien ne sont pas identiques, c'est-à-dire ne sont pas géométriquement superposables. Mais il est également possible de prévoir des organes de maintien identiques, présentant chacun deux ailes interrompues et des sites de montage de la tige sur ces deux ailes. Cette disposition réduit le nombre de composants différents nécessaires pour la fabrication du dispositif, et, dans le cas d'une fabrication par injection de matière plastique, permet de réaliser les corps des deux organes de maintien à l'aide d'une même empreinte de moule.

Le dispositif décrit peut recevoir des panneaux de hauteur quelconque, la hauteur maximale étant déterminée par la longueur de la tige 5.

Dans le dispositif décrit, la tige de guidage 5 et les trous correspondants ont des sections circulaires, la rotation de la plaquette 6 étant empêchée par son contact avec la face 23 du panneau 2. Bien entendu, d'autres profils sont possibles, assurant un guidage sans rotation de l'organe de balayage, par exemple un profil rectangulaire facilitant la réalisation de la graduation évoquée plus haut.

Des moyens peuvent être prévus pour immobiliser l'organe de balayage dans ses différentes positions le long de l'organe de guidage.

Enfin, les organes de maintien peuvent comporter des moyens de serrage différents de ceux décrits, par exemple des moyens de serrage rapide à came. Dans le cas de moyens de serrage à piston, ce dernier peut présenter une possibilité de pivotement autour d'un axe parallèle à l'arête 43, par exemple grâce à une liaison par rotule avec la vis 46, de façon à permettre le serrage de deux panneaux d'épaisseurs inégales. Il est alors avantageux que les faces d'appui du piston soient arrondies pour assurer un appui stable sur les panneaux.

## Revendications

1. Dispositif pour positionner perpendiculairement l'un à l'autre des panneaux de bois ou analogues (1, 2) en vue de leur assemblage par vissage, un premier chant (11) d'un premier panneau (1) s'appuyant contre une première face (22) du second panneau et les vis d'assemblage traversant l'épaisseur du second panneau pour venir se visser dans le premier panneau, ce dispositif comprenant :

— deux organes de maintien (4, 4') pour maintenir les panneaux dans la position relative convenable, respectivement aux deux extrémités dudit premier chant du premier panneau ;

— un organe de guidage (5) s'étendant parallèlement à la direction longitudinale dudit premier chant ; et

— un organe de balayage (6) propre à prendre différentes positions le long de l'organe de guidage et présentant au moins un alésage (62) pour le guidage d'un outil de perçage pour la réalisation des trous de vissage dans les panneaux, caractérisé et en ce que l'organe de guidage comprend un profilé (5) qui s'engage dans des trous traversants (411, 421) des deux organes de maintien, et le long duquel l'organe de balayage peut se déplacer de façon continue entre les deux organes de maintien en s'appuyant sur la seconde face (23) du second panneau.

2. Dispositif selon la revendication 1, caractérisé en ce que chaque organe de maintien comprend :

— une paroi terminale (40) sur laquelle viennent en butée des chants (14, 24) des deux panneaux perpendiculaires audit premier chant du premier panneau ;

— deux ailes (41, 42) formant équerre, perpendiculaires l'une à l'autre et perpendiculaires à la paroi terminale, sur les faces internes desquelles s'appuient respectivement ladite seconde face (23) du second panneau et une première face (13) du premier panneau, au moins une première (42) des ailes étant interrompue au voisinage de l'arête (43) de l'équerre pour permettre le passage éventuel du second panneau au-delà de la première face du premier panneau ; et

— des moyens de serrage (45, 46) pour appliquer fermement les panneaux contre les ailes.

3. Dispositif selon la revendication 2, caractérisé en ce que les moyens de serrage comprennent un piston (45) manoeuvrable en translation parallèlement au plan bissecteur de l'équerre et présentant deux faces d'appui (451, 452) respectivement tournées vers les deux ailes (41, 42).

4. Dispositif selon la revendication 3, caractérisé en ce que les faces d'appui sont maintenues respectivement parallèles aux ailes et à des distances égales de celles-ci.

5. Dispositif selon la revendication 3, caractérisé en ce que les surfaces d'appui sont arrondies et que le piston peut en outre pivoter autour d'un axe parallèle à l'arête de l'équerre.

6. Dispositif selon l'une des revendications 2 à 5, caractérisé en ce que la seconde aile (41) de chaque organe de maintien s'étend sensiblement jusqu'à l'arête de l'équerre de façon à servir de butée pour un chant (21) du second panneau lorsque ce chant vient en affleurement de la première face (13) du premier panneau, et que chaque organe de maintien est propre à recevoir l'organe de guidage aussi bien au voisinage de la seconde aile pour une telle position des panneaux qu'au voisinage de la première aile pour une position où le second panneau s'étend de part et d'autre du premier chant du premier panneau.

7. Dispositf selon l'une des revendications 2 à 5, caractérisé en ce que les deux organes de maintien sont interchangeables et comportent chacun deux ailes interrompues.

8. Dispositf selon l'une des revendications 2 à 7, caractérisé en ce que l'organe de balayage présente au moins deux alésages (62) décalés l'un par rapport à l'autre latéralement par rapport à la direction longitudinale du premier chant de façon à permettre un perçage à mi-épaisseur de panneaux de différentes épaisseurs.

## Patentansprüche

1. Vorrichtung zur gegenseitigen zueinander senkrechten Positionierung von Holzplatten od. dgl. (1, 2) im Hinblick auf das Zusammenfügen derselben mittels Verschrauben, wobei eine erste Kante (11) einer ersten Platte (1) gegen eine erste Seite (22) der zweiten Platte zum Anliegen kommt und die Verbindungsschrauben die Dicke der zweiten Platte durchdringen, um sich in die erste Platte hineinzuschrauben, umfassend zwei Halteorgane (4, 4') jeweils an beiden Enden der ersten Kante der ersten Platte, um die Platten in der passenden gegenseitigen Position zu halten, ein sich parallel der Längsrichtung der ersten Kante erstreckendes Führungsorgan (5) und ein verschiebbares Organ (6), welches verschiedene Position entlang des Führungsorganes einnehmen kann und zumindest eine Bohrung (62) zur Führung eines Bohrwerkzeuges zur Herstellung der Schraubenlöcher in den Platten aufweist, dadurch gekennzeichnet, daß das Führungsorgan ein Profil (5) umfaßt, welches in durch beide Halteorgane durchreichende Löcher (411, 421) eingesetzt ist, und entlang dessen sich das verschiebbare Organ in kontinuierlicher Weise zwischen den beiden Halteorganen und an der zweiten Seite (23) der zweiten Platte anliegend verschieben kann.

2. Vorrichtung gemäß Anspruch 1, dadurch gekennzeichnet, daß jedes Halteorgan eine Endwandung (40), an welcher die senkrecht zur ersten Kante der ersten Platte verlaufenden Kanten (14, 24) der beiden Platten anliegen, zwei zueinander rechtwinkelige und rechtwinkelig auf die Endwandung stehende und einen Winkel bildende Flügel, an deren inneren Seiten die besagte zweite Fläche (23) der zweiten Platte und eine erste Seite (13) der ersten Platte anliegen, wobei zumindest ein erster (42) der Flügel im Bereich der Endkante (43) des Winkels unterbrochen ist, um allenfalls das Vorbeireichen der zweiten Platte über die erste Seite der ersten Platte hinaus zu gestatten und Klemmeinrichtungen (45, 46) zum Andrücken der Platten gegen die Flügel umfaßt.

3. Vorrichtung gemäß Anspruch 2, dadurch gekennzeichnet, daß die Klemmeinrichtungen einen Stempel (45) umfassen, welcher parallel zur winkelhalbierenden Ebene des Winkels bewegbar ist und zwei Anlageflächen (451, 452) aufweist, welche den jeweiligen Flügeln (41, 42) zugewandt sind.

4. Vorrichtung gemäß Anspruch 3, dadurch gekennzeichnet, daß die Anlageflächen jeweils parallel zu den Flügeln und in gleichen Abständen zu diesen gehalten sind.

5. Vorrichtung gemäß Anspruch 3, dadurch gekennzeichnet, daß die Anlageflächen abgerundet sind und daß der Stempel um eine der Abschlußkante des Winkels parallele Achse geschenkt werden kann.

6. Vorrichtung gemäß einem der Ansprüche 2 bis 5, dadurch gekennzeichnet, daß der zweite Flügel (41) jedes Halteorganes sich im wesentlichen bis zur Endkante des Winkels erstreckt, sodaß er als Anschlag für eine Kante (21) der zweiten Platte dienen kann, wenn diese Kante glatt mit der ersten Seite (13) der ersten Platte abschließt und daß jedes Halteorgan dazu geeignet ist, das Führungsorgan sowohl im Bereich des zweiten Flügels für eine derartige Position der Platte sowie im Bereich des ersten Flügels für eine Position, bei welcher sich die zweite Platte auf beide Seiten der ersten Kante der ersten Platte erstreckt, aufzunehmen.

7. Vorrichtung gemäß einem der Ansprüche 2 bis 5, dadurch gekennzeichnet, daß die beiden Halteorgane auswechselbar sind und jedes zwei unterbrochene Flügel aufweist.

8. Vorrichtung gemäß einem der Ansprüche 2 bis 7, dadurch gekennzeichnet, daß das verschiebbare Organ zumindest zwei Bohrungen (62) aufweist, welche gegeneinander in bezug auf die Längsrichtung der ersten Kante seitlich versetzt sind, um eine Bohrung im mittleren Bereich der Dicke von Platten verschiedener Stärke zu gestatten.

## Claims

1. Device for positioning wooden panels or the like (1, 2) perpendicularly to each other with a view to their assembly by screwing, a first edge (11) of a first panel (1) bearing against a first face (22) of the second panel, and the assembly screws traversing the thickness of the second panel and screwing into the first panel, this device comprising :
— two holding members (4, 4') for holding the panels in the appropriate relative position, respectively at the two ends of the said first edge of the first panel ;
— a guide member (5) extending parallel to the longitudinal direction of the said first edge ; and
— a sweeping member (6) capable of assuming various positions along the guide member and having at least one bore (62) for the guidance of a piercing tool for making the screw holes in the panels, characterised in that the guide member comprises a bar (5) which engages in through holes (411, 421) of the two holding members and along which the sweeping member can move in a continuous manner between the two holding members, bearing on the second face (23) of the second panel.

2. Device according to Claim 1, characterised in that each holding member comprises :
— an end wall (40) against which butt edges (14, 24) of the two panels which are perpendicular to the said first edge of the first panel ;
— two side pieces (41, 42), forming an angle bracket, which are perpendicular to each other and perpendicular to the end wall, on the inner faces of which side pieces bear respectively the said second face (23) of the second panel and a first face (13) of the first panel, at least a first one (42) of the side pieces being interrupted in the vicinity of the corner edge (43) of the angle bracket in order to permit the optional passage of the second panel beyond the first face of the first panel ; and
— tightening means (45, 46) for applying the panels firmly against the side pieces.

3. Device according to Claim 2, characterised in that the tightening means comprise a piston (45) which can operate in translational movement parallel to the bisectional plane of the angle bracket and having two bearing faces (451, 452) respectively facing the two side pieces (41, 42).

4. Device according to Claim 3, characterised in that the bearing faces are held respectively parallel to the side pieces and at equal distances from the latter.

5. Device according to Claim 3, characterised in that the bearing surfaces are rounded, and in that the piston can furthermore pivot about an axis parallel to the corner edge of the angle bracket.

6. Device according to one of Claims 2 to 5, characterised in that the second side piece (41) of each holding member extends substantially as far as the corner edge of the angle bracket in order to serve as an abutment for an edge (21) of the second panel when this edge is flush with the first face (13) of the first panel, and in that each holding member is capable of receiving the guide member both in the vicinity of the second side piece for such a position of the panels and in the vicinity of the first side piece for a position where the second panel extends on either side of the first edge of the first panel.

7. Device according to one of Claims 2 to 5, characterised in that the two holding members are interchangeable and each comprise two interrupted side pieces.

8. Device according to one of Claims 2 to 7, characterised in that the sweeping member has at least two bores (62) which are offset relative to each other laterally with respect to the longitudinal direction of the first edge in order to permit a piercing at half-thickness of panels of varying thicknesses.

FIG. 1

FIG. 3

# FIG. 2